(19) Europäisches Patentamt
European Patent Office
Office européen des brevets

(11) **EP 2 758 146 B1**

(12) **EUROPÄISCHE PATENTSCHRIFT**

(45) Veröffentlichungstag und Bekanntmachung des Hinweises auf die Patenterteilung:
**08.08.2018 Patentblatt 2018/32**

(21) Anmeldenummer: **12748223.0**

(22) Anmeldetag: **17.08.2012**

(51) Int Cl.:
**B01D 29/11** *(2006.01)*      **B01D 29/21** *(2006.01)*
**B01D 46/52** *(2006.01)*

(86) Internationale Anmeldenummer:
**PCT/EP2012/066068**

(87) Internationale Veröffentlichungsnummer:
**WO 2013/041316 (28.03.2013 Gazette 2013/13)**

(54) **VORRICHTUNG ZUM FALTEN EINES BAHNFÖRMIGEN FILTERMEDIUMS UND VERFAHREN ZUR HERSTELLUNG EINES ZICKZACKFÖRMIG GEFALTETEN FILTERELEMENTS**

DEVICE FOR FOLDING A FILTER MEDIUM WEB AND PROCESS FOR PRODUCING A ZIGZAG-FOLDED FILTER ELEMENT

DISPOSITIF POUR PLISSER UN MÉDIUM FILTRANT EN FORME DE BANDE ET PROCÉDÉ POUR FABRIQUER UN ÉLÉMENT FILTRANT PLISSÉ EN ACCORDÉON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.09.2011 DE 102011113649**

(43) Veröffentlichungstag der Anmeldung:
**30.07.2014 Patentblatt 2014/31**

(73) Patentinhaber: **MANN + HUMMEL GMBH 71636 Ludwigsburg (DE)**

(72) Erfinder:
• **WALZ, Stefan 71691 Freiberg (DE)**
• **KELLER, Mario 71364 Winnenden (DE)**

(56) Entgegenhaltungen:
**EP-A2- 0 429 805      DE-A1- 19 735 993
JP-U- H0 570 607      US-A- 5 089 202
US-B1- 7 625 418**

## Beschreibung

### Technisches Gebiet

Die Erfindung betrifft ferner eine Vorrichtung zum Falten eines bahnförmigen Filtermediums eines Filterelements insbesondere einer Brennkraftmaschine insbesondere eines Kraftfahrzeugs, mit einer Zuführeinrichtung für das bahnförmige Filtermedium, mit einer energieeintragenden Prägeeinheit, insbesondere einer Ultraschall-Prägeeinheit, zum Prägen des bahnförmigen Filtermediums und mit einer Falteinrichtung zum Falten des bahnförmigen Filtermediums entlang von Knicklinien.

Ferner betrifft die Erfindung ein Verfahren zur Herstellung eines zickzackförmig gefalteten Filterelements insbesondere einer Brennkraftmaschine insbesondere eines Kraftfahrzeugs aus einem bahnförmigen Filtermedium, bei dem das bahnförmige Filtermedium über eine Zuführeinrichtung einer energieeintragenden Prägeeinheit, insbesondere einer Ultraschall-Prägeeinheit, zugeführt wird, mit der das bahnförmige Filtermedium geprägt wird, und das Filtermedium entlang von Knicklinien mittels einer Falteinrichtung gefaltet wird.

### Stand der Technik

Aus der WO 2010/106087 A1 ist ein Filterelement zur Entfernung von Partikeln aus einem Fluidstrom, insbesondere von Partikeln aus einem Kraftstoffstrom einer Brennkraftmaschine, bekannt. Das Filterelement umfasst eine obere Endscheibe, eine untere Endscheibe und ein dazwischen angeordnetes, ringförmiges, sternförmig gefaltetes Filtermedium. Zur Herstellung wird ein mehrschichtiges, bahnförmiges Filtermedium verwendet, das zu dem Filterelement gefaltet wird. Bei dem bahnförmigen Filtermedium liegen insbesondere die einzelnen Lagen lose aufeinander. Das Filtermedium wird mittels einer Zuführeinrichtung einer wärmeeintragenden Prägeeinheit, insbesondere Ultraschall-Prägeeinheit, zugeführt, die Knicklinien in das Filtermedium prägt. Das Filtermedium wird anschließend entlang der Knicklinien mittels einer Falteinrichtung gefaltet. Schichten des mehrschichtigen Filtermediums werden beim Prägen entlang der Knicklinien mithilfe der wärmeeintragenden Prägeeinheit verschweißt.

Der DE 197 35 983 A1 ist ein Filterelement zur Flüssigkeitsfilterung mit einer zickzackförmig faltbaren Filterbahn aus einem Filtervlies zu entnehmen, das Metallfasern, Glasfasern und/oder Polyesterfasern enthält, wobei die zickzackförmig gefaltete Filterbahn aus vorgeprägten Filtervliesplatten oder aus einer aufgerollten Filtervliesbahn hergestellt ist und anhand der Vorprägung die Einzelflächen der Zickzackform, vorzugsweise für eine Sternfaltung, herausbildbar sind.
Aus US 5,089,202 A ist ein Herstellungsverfahren bekannt, bei welchen zwei gegenläufige Walzen verwendet werden.

Aus EP 0 429 805 A2 ist ein Herstellungsverfahren bekannt, bei welcher mindestens einen Heizbacken verwendet wird um das Filtermedium zu verformen.

Der Erfindung liegt die Aufgabe zugrunde, eine Vorrichtung und ein Verfahren der eingangs genannten Art auszugestalten, mit dem/der die Schichten des bahnförmigen Filtermediums einfach und präzise miteinander verbunden und gefaltet werden können und das fertig gefaltete Filterelement eine noch höhere Stabilität und Filtereffizienz aufweist.

### Offenbarung der Erfindung

Diese Aufgabe wird erfindungsgemäß dadurch gelöst, dass das Filtermedium in wenigstens einem Abschnitt zwischen benachbarten Knicklinien zu wenigstens einem weiteren Funktionsbereich geprägt ist und die Schichten des mehrschichtigen Filtermediums entlang der Prägung des wenigstens einen Funktionsbereichs stoffschlüssig miteinander verbunden sind. Dabei ist vorgesehen, dass Schichten des mehrschichtigen Filtermediums entlang wenigstens eines Funktionsbereichs in wenigstens einem Abschnitt des Filtermediums zwischen benachbarten Knicklinien mit der energieeintragenden Prägeeinheit geprägt und beim Prägen stoffschlüssig verbunden werden, wobei das bahnförmige Filtermedium durch eine energieeintragende Ultraschall-Prägeeinheit transportiert wird, wobei die Ultraschall-Prägeeinheit eine Ambosswalze mit Prägestegen sowie eine Sonotrode mit einem Prägestempel umfasst, welcher mit den Prägestegen der Ambosswalze zusammenwirkt, wobei das Filtermedium zwischen Ambosswalze und Sonotrode so hindurchbewegt wird, dass während des Transports des bahnförmigen Filtermediums durch die Ultraschall-Prägeeinheit die Spitze der Sonotrode in flächigen Abschnitten zwischen benachbarten Knicklinien zum Prägen von Abstandsnoppen an der Filtermediumbahn entlang geführt wird.

Erfindungsgemäß ist also das Filtermedium in wenigstens einem Abschnitt zu wenigstens einem weiteren Funktionsbereich geprägt. Bei den Schichten des mehrschichtigen Filtermediums kann es sich um Lagen unterschiedlicher oder gleicher Materialien handeln. Außerdem sind die Schichten des Filtermediums entlang der Prägungen des wenigstens einen weiteren Funktionsbereichs stoffschlüssig miteinander verbunden. Bei den stoffschlüssigen Verbindungen, insbesondere Schweiß-, Schmelz- oder Klebeverbindungen, werden die Verbindungspartner durch atomare oder molekulare Kräfte zusammengehalten. Die stoffschlüssigen Verbindungen sind dauerhaft und robust gegenüber Umwelteinflüssen. Mit der Prägung und der zusätzlichen stoffschlüssigen Verbindung wird die Stabilität des Filtermediums im gefalteten Zustand erhöht. Ferner wird durch die Kombination von Prägung und stoffschlüssiger Verbindung die Funktionalität des Filterelements, insbesondere die Filtrationsleistung und/oder die Standzeit und/oder die Stabilität und/oder eine Druckdifferenz zwischen Reinseite und Rohseite des Filtermediums, verbessert. Dadurch, dass lediglich im Bereich der Prägungen stoffschlüssige Verbindungen und in anderen Abschnitten die Schichten des Filtermediums lose aneinander liegen können, kann eine Gesamtfläche des Filtermediums, welche durch Prägungen und Verbindungen bezüglich eines Fluiddurchflusses beeinträchtigt sein können, minimal gehalten. Auf diese Weise wird die zur Filtration aktive Fläche des Filtermediums optimiert, Ferner kann vorteilhafterweise die Prägung und die stoffschlüssige Verbindung in einem Prozessschritt durchgeführt werden, so dass der Herstellungsaufwand reduziert werden kann. Durch die Kombination von Prägung und stoffschlüssiger Verbindung können ferner unterschiedlichste Fitterschichten, insbesondere aus unterschiedlichen Materialien und/oder unterschiedlichen Aufbau und/oder unterschiedliche Dimension, miteinander kombiniert werden. Es können vorteilhafterweise zwei und mehr Schichten geprägt und stoffschlüssig miteinander verbunden sein.

Bei einer vorteilhaften Ausführungsform können die Knicklinien geprägt und die Schichten des mehrschichtigen Filtermediums entlang der Prägungen stoffschlüssig miteinander verbunden sein. Durch die Prägung der Knicklinien kann das Falten verbessert, insbesondere vereinfacht und präzisiert, werden kann. Mit der Prägung und der zusätzlichen stoffschlüssigen Verbindung entlang der Knicklinien kann die Stabilität des Filtermediums im gefalteten Zustand weiter erhöht werden. Alternativ können vorteilhafterweise die Knicklinien geprägt sein ohne stoffschlüssige Verbindung, Es kann vorteilhafterweise auch eine stoffschlüssige Verbindung ohne Prägung der Knicklinien realisiert sein.

Bei einer weiteren vorteilhaften Ausführungsform kann der wenigstens eine weitere Funktionsbereich eine Abstandsnoppe und/oder Stabilisierungsnoppe sein. Mit der wenigstens einen Abstandsnoppe können die bei gefalteten Filtermedium benachbarten flächigen Abschnitten zueinander beabstandet gehalten werden. Auf diese Weise kann verhindert werden, dass die flächigen Abschnitte direkt aneinander anliegen können, was die Durchströmung des Filtermediums beeinträchtigen würde. Vorteilhafterweise kann in jedem oder jedem zweiten Abschnitt jeweils wenigstens eine Abstandsnoppe vorgesehen sein. Ferner kann vorteilhafterweise zwischen zwei benachbarten Knicklinien eine Mehrzahl von Abstandsnoppen vorgesehen sein. Ferner können vorteilhafterweise in benachbarten Abschnitten einander entsprechende Abstandsnoppen gespiegelt zu einer jeweiligen Ebene, die eine Knicklinie enthält und senkrecht zur ungefalteten Filtermediumbahn verläuft, ausgestaltet sein. Die gespiegelten Abstandsnoppen können bei gefaltetem Filtermedium aneinander anliegen. Auf diese Weise kann die Abstandshaltung verbessert werden. Vorteilhafterweise kann die wenigstens eine Abstandsnoppe die Form eines halben Zylindermantels aufweisen. Alternativ kann vorteilhafterweise die wenigstens eine Abstandsnoppe die Form eines halben Kegelmantels haben. Dies hat den Vorteil, dass die Abstandsnoppe die Keilform der Falten bei gefaltetem Filtermedium ausgleichen kann. Die Abstandsnoppe kann so über ihre Länge an einer gegenüberliegenden Faltenfläche oder einer etwa gegenüberliegenden anderen Abstandsnoppe anliegen. Die Achse des Zylindermantels bzw. des Kegelmantels kann vorteilhafterweise senkrecht zu den Knicklinien verlaufen. Die wenigstens eine Abstandsnoppe kann ferner den flächigen Abschnitt, in dem sie angeordnet ist, stabilisieren.

Bei einer weiteren vorteilhaften Ausführungsform können die Schichten des mehrschichtigen Filtermediums entlang der wenigstens einen Prägung laminiert, kalandriert, verschweißt, verschmolzen oder verklebt sein. Auf diese Weise ist eine einfache stoffschlüssige Verbindung zwischen den Schichten realisierbar.

Vorteilhafterweise kann das Filtermedium zickzackförmig gefaltet sein. Ein zickzackförmig gefaltetes Filtermedium kann einfach zu einem geschlossenen Filterelement, insbesondere einem Rundfilterelement, geformt werden. Alternativ kann ein zickzackförmig gefaltetes Filterelement einfach zu einem Flachfilterelement geformt werden.

Ferner kann vorteilhafterweise wenigstens eine, vorzugsweise zwei, der Schichten des mehrschichtigen Filtermediums aus synthetischem Material sein. Synthetische Materialien können einfach mittels einem energieeintragenden Prägeverfahren geprägt und gleichzeitig stoffschlüssig miteinander oder auch mit einem andersartigen, auch nicht synthetischen Material verbunden werden. Synthetische Materialien können robust sein. Mit ihnen können hohe Standzeiten realisiert werden. Sie können einfach hergestellt und recycelt werden.

Vorteilhafterweise kann wenigstens eine der Schichten des mehrschichtigen Filtermediums ein Gitter, vorzugsweise ein Kunststoffgitter, aufweisen. Gitter erhöhen die Stabilität des Filtermediums. Kunststoff kann mit der energieeintragenden Prägeeinheit einfach erwärmt, geprägt und mit den restlichen Schichten stoffschlüssig verbunden, insbesondere verschweißt, werden.

Ferner kann vorteilhafterweise wenigstens eine der Schichten des mehrschichtigen Filtermediums eine Meltblownlage aufweisen. Durch die dreidimensionale Speicherstruktur der Meltblownlage kann eine sehr gute Filtrationsleistung erreicht werden, was die Standzeiten des Filterelements erhöhen kann. Meltblownlagen können einfach geformt, geprägt und stoffschlüssig verbunden, insbesondere verschweißt, werden.

Einer weiteren vorteilhaften Ausführungsform können die Schichten mittels eines energieeintragenden Verfahrens, insbesondere mittels Ultraschallprägung, geprägt und stoffschlüssig miteinander verbunden sein. Mit einem energieeintragenden Verfahren können einfach die Prägung und die stoffschlüssige Verbindung gleichzeitig realisiert werden.

In einer Ausführungsform können bei dem Filtermedium in Durchströmungsrichtung eine Vorfilterlage und eine Feinfilterlage aneinandergefügt sein, wobei auf der Rohseite der Vorfilterlage eine erste Stützlage und auf der Reinseite der Feinfilterlage eine zweite Stützlage zur Aufnahme der Längs- bzw. Querkräfte bei Zug- oder Druckbeanspruchung aufgebracht sein können, wobei die beiden Stützlagen jeweils unterschiedliche durchschnittliche maximale Zugkräfte in Längs- bzw. Querrichtung aufweisen können. Als Längsrichtung ist dabei die Richtung definiert, in welcher das insbesondere bahnförmige und vorzugsweise rechteckige Filtermedium seine größte Länge aufweist, insbesondere die Vorschubrichtung bei der Herstellung des Filtermediums. Als Querrichtung ist die Richtung definiert, welche entlang der Breite des Filtermediums, senkrecht zur Längsrichtung verläuft und entlang welcher das Filtermedium vorzugsweise gefaltet wird. Die unterschiedlichen Festigkeiten haben den Vorteil, dass durch diese in Längs- und Querrichtung der Längenunterschied der äußeren Lagen um die neutrale Lage in der Mitte bei evtl. Umlenkungen beim Laminations-, Rollenschneide-, Präge- und Aufstellprozess ausgeglichen wird und somit die Verarbeitbarkeit verbessert oder in bestimmten Medienkonfigurationen erst sicher gestellt wird. Die für die Verbindung von Faltenbalg und Endscheibe des Filterelements notwendige Steifigkeit, die beim Verschweißen des Filtermediums mit einer thermoplastischen Endscheibe oder beim Eintauchen des Filtermediums in einen zähflüssigen Klebstoff erforderlich ist, wird vorteilhaft mittels der Stützlage zur Aufnahme der Querkräfte erreicht.

Des Weiteren können die Stützlagen in entsprechenden Ausführungsformen vorteilhaft die Funktion einer Drainage zur Verhinderung der Paketierung des Filtermediums erfüllen. Ein weiterer Vorteil der Stützlagen besteht dabei in der Möglichkeit, die Falten "auf Block" fahren zu können, da aufgrund der dadurch aneinander liegenden Stützlagen der Durchfluss gewährleistet ist.

Bei Messungen zur Bestimmung von Eigenschaften bei Zugbeanspruchung wird im Allgemeinen, jeweils getrennt für die Maschinenlaufrichtung (Längsrichtung) und die Querrichtung die breitenbezogene Bruchkraft nach DIN EN ISO 1924-2 über die folgende Gleichung bestimmt:

$$\sigma_T^b = \frac{\overline{F}_t}{b}$$

wobei $\overline{F}_t$ den Mittelwert der maximalen Zugkraft in Newton und b die Anfangsbreite der Probe in Millimeter bezeichnet. Normgemäß beträgt b=15 mm und die Länge der Probe mindestens 180 mm. Zur Bestimmung der mittleren maximalen Zugkraft sind mindestens 10 Zugversuche erforderlich. Im Folgenden wird als Materialkennwert der Mittelwert der maximalen Zugkraft in Newton $\overline{F}_t$ angegeben. Da normgemäß die Breite b von 15 mm als feste Versuchsgröße definiert wird, kann daraus jederzeit die breitenbezogene Bruchkraft errechnet werden.

Als weiterer Materialkennwert wird im Folgenden die breitenbezogene Biegesteifigkeit S bestimmt nach DIN 53121 verwendet. Die Norm sieht verschiedene Messverfahren vor, vorzugsweise wird eine rechteckige Probe mit der Breite b entlang einer Breite eingespannt und im Abstand I von der Einspannung mit einer Kraft F belastet, wodurch sich eine maximale Durchbiegung f als Verschiebung des Kraftangriffspunktes ergibt. Die breitenbezogene Biegesteifigkeit S errechnet sich daraus zu

$$S = \frac{F}{f} * \frac{l^3}{3b}.$$

In einer Ausführungsform kann die durchschnittliche maximale Zugkraft der die Querkräfte aufnehmenden Stützlage des Filtermediums in Längsrichtung größer 10 N betragen.

In einer vorteilhaften Ausführungsform kann die durchschnittliche maximale Zugkraft der die Querkräfte aufnehmenden Stützlage des Filtermediums in Querrichtung größer 20 N betragen.

In einer Ausführungsform kann die durchschnittliche maximale Zugkraft der die Längskräfte aufnehmenden Stützlage des Filtermediums in Längsrichtung größer 20 N betragen.

In einer vorteilhaften Ausführungsform kann die durchschnittliche maximale Zugkraft der die Längskräfte aufnehmenden Stützlage des Filtermediums in Querrichtung größer 10 N betragen.

In einer Ausführungsform kann die breitenbezogene Biegesteifigkeit der die Querkräfte aufnehmenden Stützlage des Filtermediums in Längsrichtung größer 0,1 N·mm, insbesondere größer 0,15 N·mm, betragen.

In einer Ausführungsform kann die breitenbezogene Biegesteifigkeit der die Querkräfte aufnehmenden Stützlage des Filtermediums in Querrichtung größer 0,3 N·mm, insbesondere größer 0,4 N·mm, betragen.

In einer vorteilhaften Ausführungsform kann die breitenbezogene Biegesteifigkeit der die Längskräfte aufnehmenden Stützlage des Filtermediums in Längsrichtung größer 0,3 N· mm, besonders bevorzugt größer 0,45 N·mm, betragen.

In einer Ausführungsform kann die breitenbezogene Biegesteifigkeit der die Längskräfte aufnehmenden Stützlage des Filtermediums in Querrichtung größer 0,1 N·mm, besonders bevorzugt größer 0,15 N·mm, betragen.

In einer Ausführungsform können die Stützlagen jeweils in Form eines Gitters ausgebildet sein, welches sich kreuzende Fäden aufweisen kann, wobei die kreuzenden Fäden einen Fadenwinkel aufspannen können.

In einer Ausführungsform kann der Fadenwinkel der für die Aufnahme der Querkräfte zuständigen Stützlage des Filtermediums im Bereich von 70° bis 120°, bevorzugt im Bereich von 80° bis 100°, besonders bevorzugt bei 90°, liegen.

In einer Ausführungsform kann der Fadenwinkel der für die Aufnahme der Längskräfte zuständigen Stützlage des Filtermediums im Bereich von 40° bis 80°, insbesondere im Bereich von 50° bis 70°, liegen.

In einer Ausführungsform kann die Vorfilterlage des Filtermediums aus einer Meltblownlage mit einer Dicke im Bereich von 0,1 mm bis 1 mm und einem Flächengewicht im Bereich von 10 g/m$^2$ bis 200 g/m$^2$ gebildet werden.

In einer Ausführungsform kann die Dicke der Meltblownlage des Filtermediums zwischen 0,2 mm und 0,4 mm und das Flächengewicht zwischen 90 g/m$^2$ und 110 g/m$^2$ betragen.

In einer Ausführungsform kann der Faserdurchmesser der Vorfilterlage und/oder der Feinfilterlage des Filtermediums im Bereich von 0,1 $\mu$m bis 10 $\mu$m liegen.

In einer Ausführungsform können die Vorfilterlage und/oder die Feinfilterlage des Filtermediums hergestellt sein aus Materialien ausgewählt aus der Gruppe bestehend aus Polybutylenterephthalat (PBT) -Meltblown, Polyamid(PA)-Meltblown, Polypropylen(PP)-Meltblown und Polyethersulfon (PES)-Meltblown.

In einer Ausführungsform kann die Feinfilterlage des Filtermediums aus einer Meltblownlage mit einer Dicke im Bereich von 0,1 mm bis 1,5 mm und einem Flächengewicht im Bereich von 10 g/m$^2$ bis 200 g/m$^2$ gebildet werden.

In einer Ausführungsform kann die Dicke der Meltblownlage des Filtermediums zwischen 0,6 mm und 1,0 mm und das Flächengewicht zwischen 90 g/m$^2$ und 110 g/m$^2$ liegen.

In einer Ausführungsform kann das Filtermedium zusätzlich eine dritte Filterlage aufweisen.

In einer Ausführungsform kann die dritte Filterlage des Filtermediums aus einer Meltblownlage mit einer Dicke im Bereich von 0,1 mm bis 1 mm und einem Flächengewicht im Bereich von 10 g/m$^2$ bis 100 g/m$^2$ gebildet werden.

In einer Ausführungsform kann die Dicke der Meltblownlage des Filtermediums zwischen 0,2 mm und 0,4 mm und das Flächengewicht zwischen 30 g/m$^2$ und 60 g/m$^2$ betragen.

In einer Ausführungsform kann die dritte Filterlage des Filtermediums hergestellt sein aus Materialien ausgewählt aus der Gruppe bestehend aus Polybutylenterephthalat (PBT)-Meltblown, Polyamid(PA)-Meltblown, Polypropylen(PP)-Meltblown und Polyethersulfon(PES)-Meltblown.

In einer Ausführungsform kann der Faserdurchmesser der dritten Filterlage des Filtermediums im Bereich von 0,1 $\mu$m bis 10 $\mu$m liegen.

In einer Ausführungsform kann die dritte Filterlage als Absolutabscheider ausgebildet sein.

In einer Ausführungsform können die Stützlagen und/oder die Feinfilterlage und/oder die Vorfilterlage aus einer Kombination bestehen, ausgewählt aus der Gruppe bestehend aus Gitter-Spunbond, Spunbond-Spunbond, Spunbond-Filterlagen und Gitter-Filterlagen. Bei dem Spunbond kann es sich um ein Spinnvlies handeln.

In einer Ausführungsform können die Filterlagen und/oder Feinfilterlage und/oder Vorfilterlage aus trockengelegtem Vlies, insbesondere Krempelvlies, und/oder aus nassgelegtem Vlies bestehen.

In einer Ausführungsform kann eine Filterlage und/oder Feinfilterlage und/oder Vorfilterlage hergestellt sein aus Materialien, ausgewählt aus einer Gruppe bestehend aus synthetischen Polymeren, vorzugsweise Polybutylenterephthalat (PBT), Polyamid (PA), Polyethersulfon (PES), Polyethylenterephthalat (PET), und/oder aus natürlichen Polymeren und/oder Mischungen daraus,

Die Aufgabe wird erfindungsgemäß ferner mit der Vorrichtung dadurch gelöst, dass die energieeintragende Prägeeinheit ausgestaltet ist zum Prägen und zum stoffschlüssigen Verbinden von Schichten des mehrschichtigen Filtermediums entlang wenigstens eines Funktionsbereichs in wenigstens einem Abschnitt des Filtermediums zwischen benachbarten Knicklinien, Die oben in Verbindung mit dem erfindungsgemäßen Filterelement aufgezählten Merkmale und Vorteile gelten für die Vorrichtung und deren vorteilhafte Ausgestaltungen entsprechend und umgekehrt.

Erfindungsgemäß ist also die energieeintragende Prägeeinheit so ausgestaltet, dass sie gleichzeitig das Filtermedium prägt und die Schichten dort miteinander stoffschlüssig verbindet, insbesondere verschweißt. Das Filtermedium wird so entlang des wenigstens einen weiteren Funktionsbereichs dauerhaft insbesondere robust gegenüber Umwelteinflüssen laminiert. Auf diese Weise wird die Stabilität des Filtermediums im gefalteten Zustand erhöht. Außerdem wird durch die definierte und stabile Verbindung der Schichten das anschließende Falten erleichtert und verbessert. Insbesondere werden die Schichten derart miteinander verschweißt, dass die Verbundfestigkeit an den Verbindungs- bzw. Schweißlinien der Schichten mindestens so groß ist, wie die Materialfestigkeit innerhalb der einzelnen Schichten. Vorteilhafterweise kann die energieeintragende Prägeeinheit ausgestaltet sein zum Prägen der Knicklinien und/oder stoffschlüssigen Verbinden der Schichten des mehrschichtigen Filtermediums entlang der Knicklinien. Auf diese Weise kann das Falten weiter erleichtert und verbessert werden.

Vorzugsweise kann als energieeintragende Prägeeinheit eine Ultraschall-Prägeeinheit verwendet werden. Jedoch kann die Energie alternativ auch mittels Thermokalander, Laser oder weiteren Energiequellen eingebracht werden.

Bei einer vorteilhaften Ausführungsform kann vorgesehen sein, dass Schichten des mehrschichtigen Filtermediums vor dem Prägen nicht miteinander verbunden sind. Auf einen vorhergehenden Arbeitsgang zum Verbinden, insbesondere Laminieren, der Schichten kann so verzichtet werden. Die Schichten liegen als separate Lagen bis zum Prägeprozess entspannt flächig aneinander und sind relativ zueinander verschiebbar. Spannungen zwischen den Schichten, die beim Prägen und beim Falten auftreten können, werden so einfach ausgeglichen. Dadurch werden der Prägevorgang und der Faltvorgang vereinfacht.

Bei einer weiteren vorteilhaften Ausführungsform kann der energieeintragenden Prägeeinheit eine Aufstelleinheit nachgeordnet sein zur zickzackförmigen Faltung des bahnförmigen Filtermediums. Das Filtermedium kann mit der Aufstelleinheit direkt im Anschluss an das Prägen und stoffschlüssige Verbinden, insbesondere Verschweißen, gefaltet werden. So können die Schichten sich einfach nach jeder Prägung einer Knicklinie zueinander ausrichten, um Spannungen abzubauen, was den Faltprozess weiter vereinfacht und die Präzision erhöht.

Bei einer weiteren vorteilhaften Ausführungsform kann die energieeintragende Prägeeinheit eine Ambosswalze mit Prägestegen, eine ultraschallbetriebene Sonotrode und einen Prägestempel, der insbesondere von der Sonotrode zumindest mit gebildet ist, aufweisen. Auf diese Weise kann einfach in einem kontinuierlichen Verfahren das bahnförmige Filtermedium in einem Arbeitsschritt geprägt und verschweißt werden. Vorteilhafterweise kann auch eine andersartige energieeintragende Prägeeinheit insbesondere mit einem mit dem bahnförmigen Filtermedium mitfahrenden Ultraschallstempel oder einer rotierenden Ultraschallsonotrodenwalze verwendet werden,

Vorteilhafterweise kann in Transportrichtung des Filtermediums vor und hinter der Ambosswalze jeweils eine insbesondere angetriebene Nippwalze angeordnet sein. Die Positionen der Nippwalzen relativ zur Ambosswalze sind veränderbar, um einen Einlaufwinkel und einen Auslaufwinkel über die Ambosswalze einzustellen. Angetriebene Nippwalzen können ferner dem Transport der Filtermediumbahnen dienen. Vorteilhafterweise kann die Geschwindigkeit der Nippwalzen eingestellt werden. Die Nippwalzen können in Position und/oder Geschwindigkeit an die Eigenschaften der Filtermediumbahn, insbesondere Materialzusammensetzung, Schichtdicken und/oder Abmessungen, angepasst werden, um eine optimale Prägung und stoffschlüssige Verbindung, insbesondere Verschweißung, zu ermöglichen.

Die Aufgabe wird erfindungsgemäß ferner verfahrenstechnisch dadurch gelöst, dass Schichten des mehrschichtigen Filtermediums entlang wenigstens eines Funktionsbereichs in wenigstens einem Abschnitt des Filtermediums zwischen benachbarten Knicklinien mit der energieeintragenden Prägeeinheit geprägt und beim Prägen stoffschlüssig verbunden werden. Vorteilhafterweise können mit der energieeintragenden Prägeeinheit zusätzlich die Knicklinien in das bahnförmige Filtermedium geprägt werden und/ oder die Schichten des mehrschichtigen Filtermediums entlang der Knicklinien stoffschlüssig verbunden werden. Die oben in Verbindung mit dem erfindungsgemäßen Filterelement und der erfindungsgemäßen Vorrichtung aufgezählten Merkmale und Vorteile gelten für das Verfahren und dessen vorteilhafte Ausgestaltungen entsprechend und umgekehrt.

Bei einer vorteilhaften Ausgestaltung des Verfahrens kann das Filtermedium mittels einer Ambosswalze mit Prägestegen, einer ultraschallbetriebenen Sonotrode und einem Prägestempel, der insbesondere von der Sonotrode zumindest mit gebildet ist, geprägt und stoffschlüssig verbunden, insbesondere verschweißt, werden.

Vorteilhafterweise kann das mehrschichtige Filtermedium nach dem Prägen und stoffschlüssigen Verbinden, insbesondere Verschweißen, mit einer Aufstelleinheit zickzackförmig gefaltet werden.

## Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen:

Figur 1 schematisch eine Vorrichtung gemäß einem ersten Ausführungsbeispiel zum zickzackförmigen Falten einer dreischichtigen Filtermediumbahn;

Figur 2 schematisch eine Detailansicht einer Ultraschall-Prägeeinheit der Vorrichtung aus der Figur 1;

Figur 3 schematisch eine Detailansicht der mit der Ultraschall-Prägeeinheit aus der Figur 2 geprägten und verschweißten Filtermediumbahn;

Figur 4 eine isometrische Darstellung eines mit der Vorrichtung aus der Figur 1 hergestellten zickzackförmig gefalteten Filterelements gemäß einem ersten Beispiel;

Figur 5 eine Detailansicht des Filterelements aus der Figur 4;

Figur 6 schematisch eine Vorrichtung gemäß einem zweiten Beispiel zum zickzackförmigen Falten der dreischichtigen Filtermediumbahn, welche zu dem ersten Ausführungsbeispiel aus der Figur 1 ähnlich ist;

Figur 7 eine isometrische Darstellung eines mit der Vorrichtung aus der Figur 1 hergestellten zickzackförmig gefalteten runden Filterelements gemäß einem zweiten Beispiel;

Figur 8 einen Ausschnitt der Filtermediumbahn aus den Figuren 1 bis 7 in Draufsicht;

Figur 9     einen Schnitt der Filtermediumbahn aus der Figur 8 entlang der dortigen Schnittlinie IX-IX;

Figur 10    einen Ausschnitt einer Filtermediumbahn gemäß einem zweiten Beispiel, welche zu der Filtermediumbahn aus den Figuren 1 bis 9 ähnlich ist, in Draufsicht;

Figur 11    einen Schnitt der Filtermediumbahn aus der Figur 10 entlang der dortigen Schnittlinie XI-XI.

In den Figuren sind gleiche Bauteile mit gleichen Bezugszeichen versehen,

## Ausführungsform(en) der Erfindung

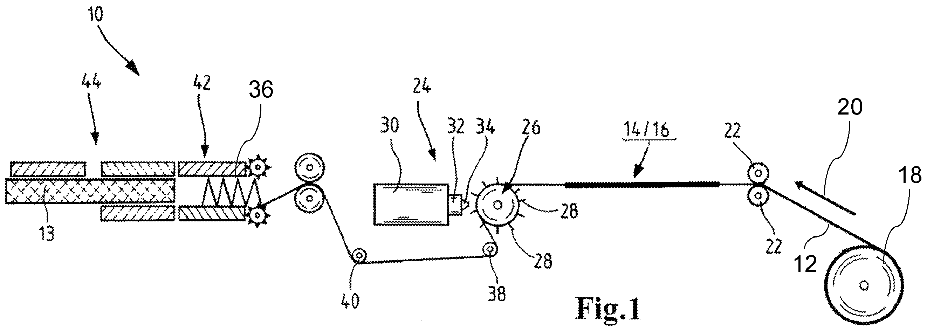

In der Figur 1 ist eine Vorrichtung 10 zum zickzackförmigen Falten einer mehrschichtigen Filtermediumbahn 12 eines Filterelements 13 gezeigt.

Das Filterelement 13 wird verwendet zur Filtrierung von flüssigen oder gasförmigen Fluiden, beispielsweise Motoröl, Kraftstoff, Verbrennungsluft oder Druckluft, in Kraftfahrzeugen.

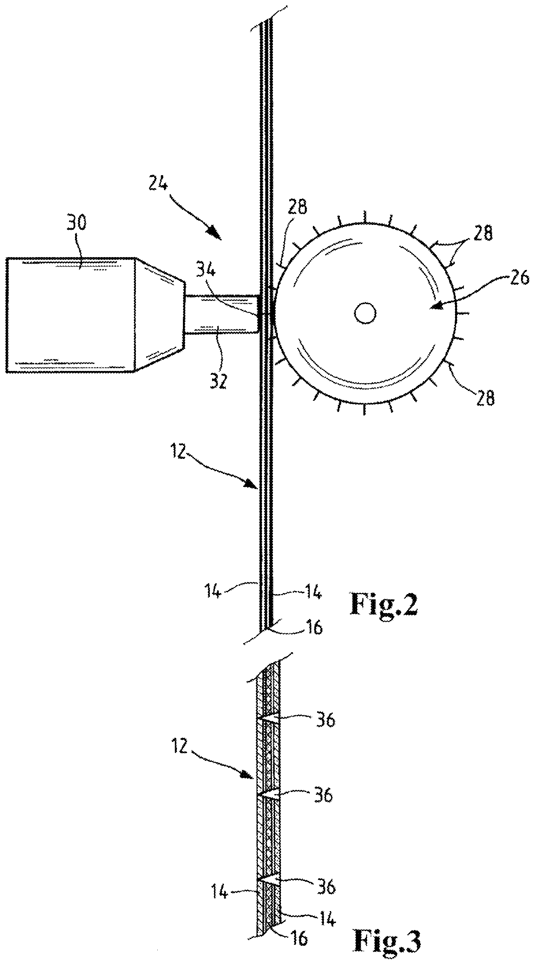

Die Filtermediumbahn 12 besteht, wie in den Figuren 2 und 3 gezeigt, aus drei Schichten oder Lagen, die zunächst lose aneinander liegen. Die beiden äußeren Schichten bestehen aus Kunststoffgittern 14. Zwischen den Kunststoffgittern 14 ist eine Meltblownlage 16 angeordnet, die die mittlere Schicht bildet. Alternative Ausführungsformen sehen zwei oder mehr Schichten vor.
Die endlose Filtermediumbahn 12 wird von einer Rolle 18 in Förderrichtung, angedeutet durch einen Pfeil 20, abgerollt und zwischen zwei Transportrollen 22 hindurchgeführt. Die Filtermediumbahn 12 wird, ohne dass sie vorher eigens erwärmt wird, einer Ultraschall-Prägeeinheit 24 zugeführt.

Die Ultraschall-Prägeeinheit 24 verfügt über eine Ambosswalze 26, welche umfangsseitig mit einer Vielzahl von Prägestegen 28 ausgestattet ist. Die Prägestege 28 sind in gleichmäßigen Abständen entlang des Umfangs der Ambosswalze 26 verteilt angeordnet. Die Prägestege 28 können auch in ungleichmäßigen Abständen entlang des Umfangs der Ambosswalze 26 verteilt angeordnet sein. Sie erstrecken sich jeweils axial zur Ambosswalze 26, in radialer Richtung. Die Ausdehnung der Prägestege 28 in Umfangsrichtung beträgt jeweils etwa 0,5 mm bis 2 mm. Die radial äußeren Oberflächen der Prägestege 28 sind glatt. Durch ungleichmäßige Abstände der Prägestege 28 sind sich ändernde Faltenhöhen realisierbar.

Ferner weist die Ultraschall-Prägeeinheit 24 eine Ultraschalleinheit 30 auf, mit der Ultraschall in hier nicht weiter interessierender Weise in eine Sonotrode 32 eingeleitet wird. Die Ultraschalleinheit 30 mit der Sonotrode 32 befindet sich neben der Ambosswalze 26. Die Sonotrode 32 bildet einen Prägestempel, welcher mit dem Prägestegen 28 der Ambosswalze 26 zusammenwirkt.

Die Filtermediumbahn 12 wird zwischen der Ambosswalze 26 und der Sonotrode 32 hindurch bewegt. In Transportrichtung 20 vor der Ambosswalze 26 können sich die Kunststoffgitter 14 und die Meltblownlage 16 relativ zueinander verschieben, Auf diese Weise werden mechanische Spannungen zwischen den Schichten abgebaut.

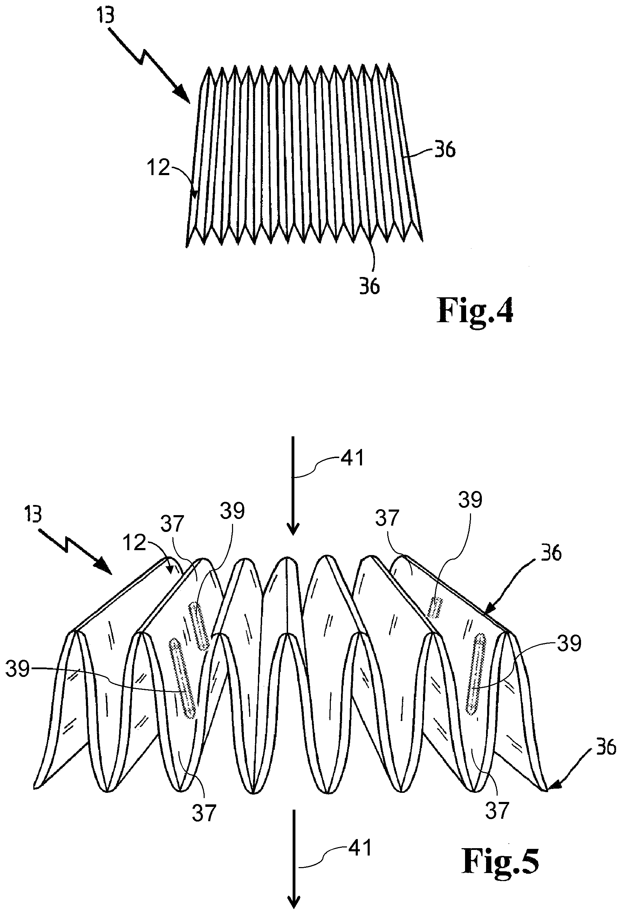

Während des Transports der Filtermediumbahn 12 durch die Ultraschall-Prägeeinheit 24 führt die Einleitung von Ultraschall an einer Spitze 34 der Sonotrode 32 zum Erwärmen der Filtermediumbahn 12 in den durch die Prägestege 28 definierten Bereichen. Die so geprägten Bereiche bilden Knicklinien 36 für das anschließende Falten der Filtermediumbahn 12. Die Knicklinien 36 sind in der Figur 3 im Detail und bei einem fertigen Filterelement 13 in den Figuren 4 und 5 gezeigt. Eine Durchströmrichtung des zu reinigenden Fluids durch das Filterelement 13 ist in Figur 5 angedeutet durch Pfeile 41. Die Anströmseite, also die Rohseite, des Filterelements 13 befindet sich in der Figur 5 oben. Die Abströmseite, also die Reinseite, des Filterelements 13 ist in Figur 5 unten.

Die Höhen der Prägestege 28 in radialer Richtung, der Abstand zwischen der Spitze 34 der Sonotrode 32 und den Prägestegen 28 und die mittels der Sonotrode 32 auf die Filtermediumbahn 12 abgegebene Energie sind auf die Eigenschaften der Filtermediumbahn 12, beispielsweise die Materialart, die Schichtdicken und die Gesamtdicke abgestimmt, um gleichzeitig mit dem Prägevorgang die Kunststoffgitter 14 und die Meltblownlage 16 mit der Sonotrode 32 entlang der Knicklinie 36 zu verschweißen und so stoffschlüssig zu verbinden.

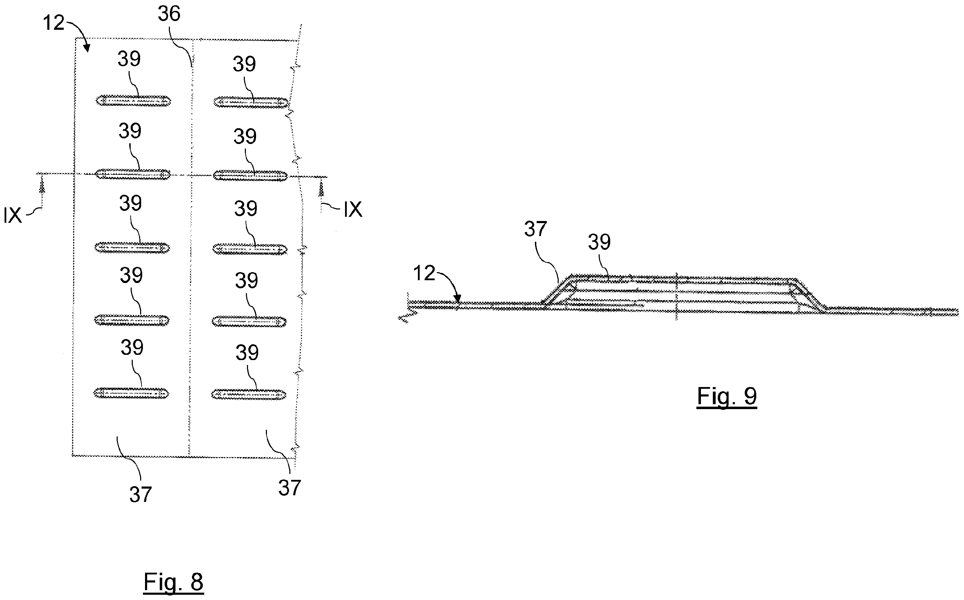

Ferner wird während des Transports der Filtermediumbahn 12 durch die Ultraschall-Prägeeinheit 24 die Spitze 34 der Sonotrode 32 in den flächigen Abschnitten 37 zwischen benachbarten Knicklinien 36 zum Prägen von Abstandsnoppen 39 an der Filtermediumbahn 12 entlang geführt. Durch die Einleitung von Ultraschall an der Spitze 34 der Sonotrode 32 werden die Kunststoffgitter 14 und die Meltblownlage 16 mit dem prägen der Abstandsnoppen 39 verschweißt und so stoffschlüssig verbunden. In Figur 5 sind beispielhaft nur vier der Abstandsnoppen 39 gezeigt. In Wirklichkeit ist, wie in Figur 8 gezeigt, in jedem Abschnitt 37 eine Mehrzahl von Abstandsnoppen 39 angeordnet.

In der Figur 8 ist ein Ausschnitt der Filtermediumbahn 12 in Draufsicht gezeigt. Die Figur 9 zeigt eine der Abstandsnoppen 39 im Schnitt. In jedem Abschnitt 37 zwischen jeweils zwei der Knicklinien 36 ist eine Mehrzahl von Abstandsnoppen 39 angeordnet. Die Abstandsnoppen 39 in einem Abschnitt 37 sind in Querrichtung der Filtermediumbahn 12, also in Richtung der Knicklinien 36, nebeneinander angeordnet. Die Abstandsnoppen 39 haben jeweils die Form eines halben Zylindermantels. Die virtuelle Achse des Zylindermantels liegt etwa in der Ebene des entsprechenden Abschnitts 37. Sie verläuft quer zu den Knicklinien 36. Die Abstandsnoppen 39 sind in Form und Dimension identisch. Es können aber auch unterschiedliche Abstandsnoppen 39 vorgesehen sein.

Der Verlauf der Abstandsnoppen 39 kann in einem beliebigen Winkel zwischen 0° und 135° zu den Knicklinien 36 verlaufen, vorzugsweise im Bereich von 90° ± 45°.

In benachbarten flächigen Abschnitten 37 der Filtermediumbahn 12, deren Oberflächen beim Falten einander zugewandt sind, sind die Abstandsnoppen 39 jeweils paarweise gespiegelt zu der dazwischenliegenden Knicklinie 36 angeordnet. Bei der gefalteten Filtermediumbahnen 12 liegen die Erhebungen der einander entsprechenden, gespiegelten Abstandsnoppen 39 aneinander und halten die Faltenflächen in einem Abstand zueinander.

Zwischen den Knicklinien 36 und den Abstandsnoppen 39 sind die Kunststoffgitter 14 und die Meltblownlage 16 nicht miteinander verbunden und können sich weiterhin relativ zueinander ausrichten. Mechanische Spannungen in der geprägten und verschweißten Filtermediumbahn 12 können so beim späteren Faltprozess einfacher abgebaut werden, so dass eine unerwünschte Faltenbildung zwischen den Knicklinien 36 vermieden wird und der Faltprozess einfacher und präziser vonstattengeht. Außerdem wird so vermieden, dass die Kunststoffgitter 14 und die Meltblownlage 16 beim Faltprozess voneinander abgehoben und getrennt werden. Die Verwendung einer einzigen Sonotrode 32 trägt dabei zur Vermeidung von mechanischen Spannungen und Falten in der Filtermediumbahn 12 bei.

In Förderrichtung 20 hinter der Ultraschall-Prägeeinheit 24 wird die geprägte und verschweißte Filtermediumbahn 12 über eine Umlenkrolle 38 und eine Umlenkrolle 40 bei Raumtemperatur einer Aufstelleinheit 42 zugeführt. In der Aufstelleinheit 42 wird die Filtermediumbahn 12 in hier nicht weiter interessierender Weise zickzackförmig gefaltet und zu den Filterelementen 13 geschnitten.

Die Filterelemente 13 werden anschließend einer hier nicht weiter interessierenden Faltenspitzenheizung 44 zugeführt und erhitzt.

Mit der Vorrichtung 10 können Faltgeschwindigkeiten von 700 Falten pro Minute und mehr erreicht werden.

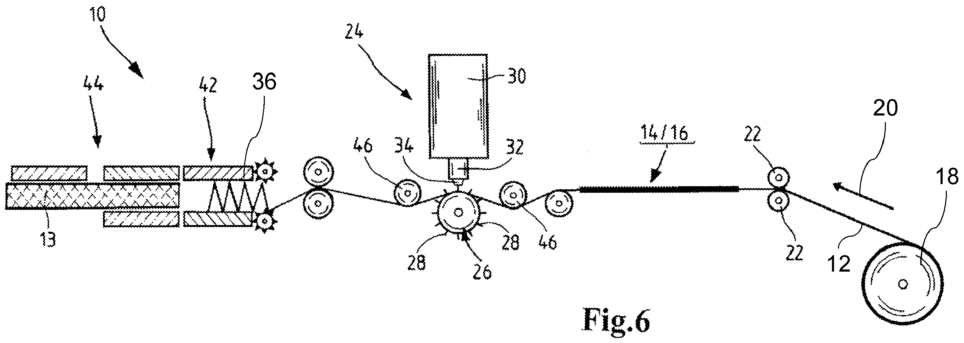

Bei einem zweiten Beispiel, dargestellt in Figur 6, sind diejenigen Elemente, die zu denen des ersten, in den Figuren 1 bis 5 beschriebenen Beispiels ähnlich sind, mit denselben Bezugzeichen versehen, so dass bezüglich deren Beschreibung auf die Ausführungen zum ersten Beispiel Bezug genommen wird. Dieses Beispiel unterscheidet sich vom ersten dadurch, dass in Förderrichtung 20 vor und hinter der Ambosswalze 26 zusätzlich jeweils eine drehend angetriebene Nippwalze 46 angeordnet ist, die dem Transport der Filtermediumbahn 12 dienen. Auf die Umlenkrollen 38 und 40 wird hier verzichtet. Außerdem befindet sich beim zweiten Beispiel die Ultraschalleinheit 30 mit der Sonotrode 32 oberhalb der Ambosswalze 26.

Die Nippwalzen 46 sind in ihrer vertikalen Position relativ zur Ambosswalze 26 einstellbar, so dass mit ihnen ein Einlaufwinkel und ein Auslaufwinkel über die Ambosswalze 26 eingestellt werden kann. Die Positionen und die Geschwindigkeiten der Nippwalzen 46 werden abhängig von den Eigenschaften der Filtermediumbahn 12 so eingestellt, dass eine optimale Prägung, Verschweißung und Faltung erfolgt. Für einige Medien können auch nicht angetriebene Nippwalzen vorteilhaft sein.

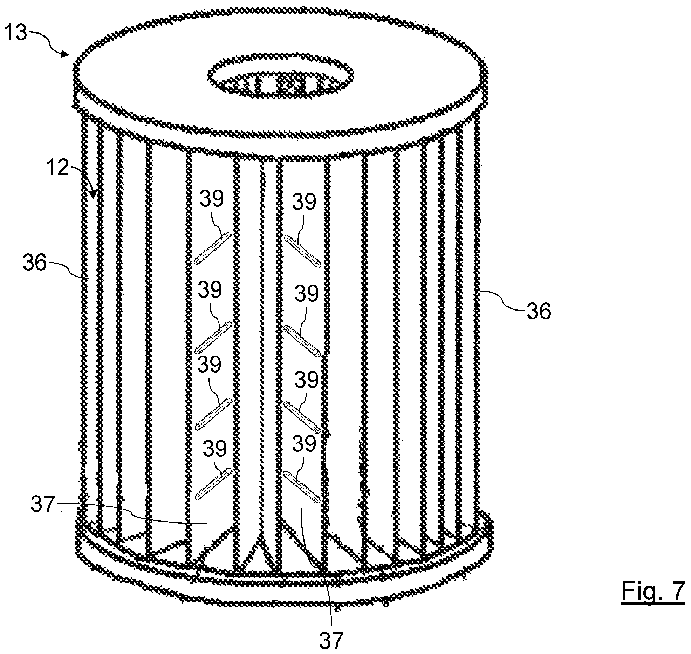

In der Figur 7 ist ein zweites Beispiel eines Filterelements 13 gezeigt. Im Unterschied zu dem ersten Beispiel ist das Filterelement 13 beim zweiten Beispiel in Form eines Rundfilterelementes ausgestattet. Die Filtermediumbahn 12 aus den Figuren 1 bis 3, 8 und 9 ist hier ringförmig, sternförmig gefaltet und geschlossen. An ihren Stirnseiten ist jeweils eine hier nicht weiter interessierende Endscheibe angeordnet. Auch hier sind in jedem flächigen Abschnitt 37 eine Mehrzahl von Abstandsnoppen 39 angeordnet, von denen in der Figur 7 der besseren Übersichtlichkeit wegen lediglich einige wenige gezeigt sind.

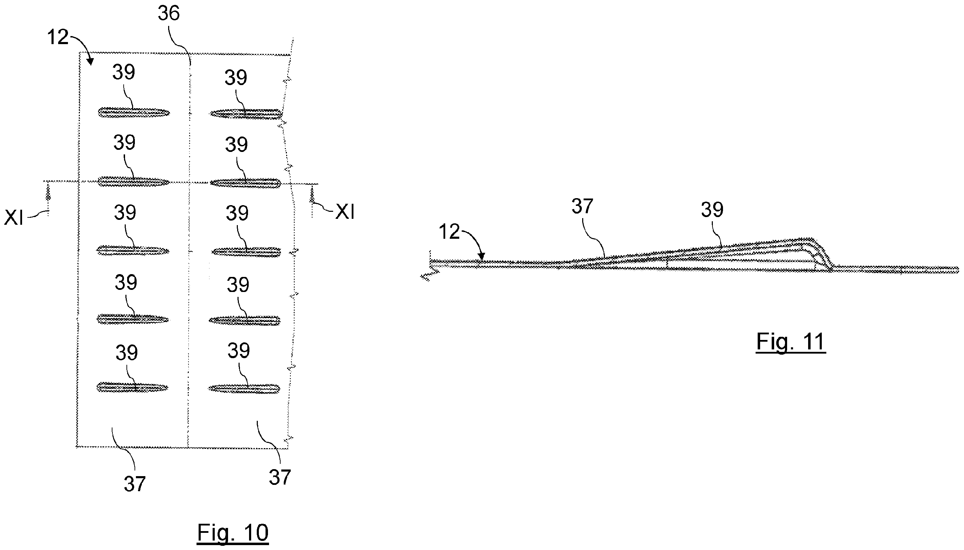

In den Figuren 10 und 11 ist ein zweites Beispiel einer Filtermediumbahn 12 gezeigt, bei der die Abstandsnoppen 39 die Form eines halben Kegelmantels haben. Die Spitzen der Kegel der Abstandsnoppen 39, die zu einer Knicklinie 36 enthaltenen Ebene senkrecht zur Filtermediumbahn 12 gespiegelt sind und bei gefalteter Filtermediumbahn 12 aneinanderliegen, zeigen zueinander. Bei der gefalteten Filtermediumbahnen 12 liegen die einander entsprechenden Abstandsnoppen 39 über ihre axiale Länge aneinander an.

Bei allen oben beschriebenen Beispielen eines Filterelements 13, einer Vorrichtung 10 und eines Verfahrens zur Herstellung eines zickzackförmig gefalteten Filterelements 13 sind unter anderem folgende Modifikationen möglich:

Die Vorrichtung 10 und das Verfahren sind nicht beschränkt auf die Herstellung von zickzackförmig gefalteten Filtermediumbahnen 12 für Filterelemente 13 im Kraftfahrzeugbereich. Vielmehr können sie auch in anderen technischen Bereichen, beispielsweise in der Industrie bei Filtern für Industriemotoren oder Kompressoren oder in der Wassertechnik, verwendet werden.

Statt mittels Ultraschallprägen können die Schichten der Filtermediumbahn 12 auch mittels einem andersartigen energieeintragenden Verfahren geprägt und stoffschlüssig miteinander verbunden werden. Statt miteinander verschweißt können die Schichten auch in anderer Weise stoffschlüssig miteinander verbunden werden, Die Schichten können beispielsweise auch laminiert, kalandriert, verschmolzen oder verklebt werden.

Anstelle der Ultraschall-Prägeeinheit 24 mit einer rotierenden Ambosswalze 26 kann auch eine andersartige Ultraschall-Prägeeinheit verwendet werden. Beispielsweise kann eine mit der Filtermediumbahn mitfahrende Sonotrode oder eine auf einer Walze ausgebildete rotierende Sonotrode, beispielsweise eine Ultraschallsonotrodenwalze, eingesetzt werden.

Anstelle der dreischichtigen Filtermediumbahn 12 kann auch eine Filtermediumbahn mit mehr oder weniger als drei Schichten mit der Vorrichtung 10 gemäß dem Verfahren geprägt, stoffschlüssig verbunden und gefaltet werden. Beispielsweise kann auch ein Verbund aus zwei Gitterlagen und zwei Meltblownlagen verwendet werden.

Anstelle der Filtermediumbahn 12 mit zwei Kunststoffgittern 14 und einer Meltblownlage 16 können auch andersartige mehrschichtige Filtermediumbahnen, beispielsweise aus Zellulosemedien mit auflaminiertem Meltblown, Vlies mit auflaminierten Gittern, Glasfasermedien, beispielsweise kaschiertem Glasfasermedium mit Gitter, oder Luftfiltervlies, mit der Vorrichtung 10 geprägt, stoffschlüssig verbunden, insbesondere verschweißt, und gefaltet werden. Es können Filtermediumbahnen mit wenigstens einer Schicht oder Lage aus einem synthetischen Material verwendet werden. Es können auch alle Schichten bzw. Lagen der Filtermediumbahn aus synthetischem Material sein.

Es können auch Filtermediumbahnen, welche in einem vorherigen Arbeitsgang miteinander verbunden werden, mit der Ultraschall-Prägeeinheit 24 entlang der Knicklinien 36 und/oder entlang der Abstandsnoppen 39 geprägt und stabil formschlüssig verbunden, insbesondere verschweißt, werden. Beispielsweise können in einem solchen vorigen Arbeitsgang bei einer Filtermediumbahn aus fünf Einzellagen die beiden Meltblownlagen beispielsweise mittels Polyurethan (PUR)-Schmeizklebstoff im Sprühauftrag auflaminiert werden. Anschließend können die beiden Kunststoffgitter beispielsweise ebenfalls mittels PUR-Schmelzkleber auf die laminierten Meltblownlagen laminiert werden.

Die zwei oder mehr Schichten 14, 16 der Filtermediumbahn 12 können auch getrennt abgewickelt und erst über entsprechende Transportrollen 22 lose aneinandergelegt werden.

Statt in jedem Abschnitt 37 können beispielsweise auch nur in jedem zweiten Abschnitt 37 entsprechende Abstandsnoppen 39 angeordnet sein, welche direkt an den Faltflächen der jeweils anderen gegenüberliegenden Abschnitte 37 zur Abstandshaltung anliegen können. Die Abstandsnoppen können auch andere Form und/oder Orientierung haben.

Die Abstandsnoppen 39 können auch in einem Abschnitt 37 wechselseitig erhaben sein, so dass sich immer jede zweite Abstandsnoppe 39 im Anströmbereich und im Abströmbereich gegenüberliegen.

Zusätzlich oder alternativ zu den Abstandsnoppen 39 können auch andersartige Funktionsbereiche, beispielsweise Verstärkungsstege, in den Abschnitten 37 zwischen benachbarten Knicklinien 36 geprägt und stoffschlüssig miteinander verbunden sein.

Die Filtermediumbahn 12 kann auch beispielsweise mittels einer Einlaufheizung erhitzt werden, beispielsweise zur Laminierung der einzelnen Schichten, bevor sie der Ultraschall-Prägeeinheit 24 zugeführt wird.

Auf das Prägen und/oder stoffschlüssige Verbinden der Schichten 14, 16 entlang der Knicklinien 36 kann auch ganz oder teilweise verzichtet werden.

Die Ausdehnung der Prägestege 28 in Umfangsrichtung der Ambosswalze 26 kann auch größer oder kleiner als 1 mm sein.

Die radial äußeren Oberflächen der Prägestege 28 können statt glatt auch strukturiert sein.

Bei dem zweiten Ausführungsbeispiel der Vorrichtung können anstelle der angetriebenen Nippwalzen 46 auch nicht angetriebene Nippwalzen vorgesehen sein. Es kann auch nur eine der beiden Nippwalzen 46 angetrieben sein.

## Patentansprüche

1. Vorrichtung (10) zum Falten eines mehrschichtigen bahnförmigen Filtermediums (12) eines Filterelements (13) insbesondere einer Brennkraftmaschine insbesondere eines Kraftfahrzeugs, mit einer Zuführeinrichtung (18, 22) für das bahnförmige Filtermedium (12), mit einer energieeintragenden Ultraschall-Prägeeinheit (24), zum Prägen des bahnförmigen Filtermediums (12) und mit einer Falteinrichtung (42) zum Falten des bahnförmigen Filtermediums (12) entlang von Knicklinien (36), **dadurch gekennzeichnet, dass** die energieeintragende Ultraschall-Prägeeinheit (24) ausgestaltet ist zum Prägen und zum stoffschlüssigen Verbinden von Schichten (14, 16) des mehrschichtigen Filtermediums (12) entlang wenigstens eines Funktionsbereichs (39) in wenigstens einem Abschnitt (37) des Filtermediums (12) zwischen benachbarten Knicklinien (36), wobei die energieeintragende Ultraschall-Prägeeinheit (24) eine Ambosswalze (26) mit Prägestegen (28) sowie eine Sonotrode (32) mit einem Prägestempel umfasst, welcher mit den Prägestegen (28) der Ambosswalze (26) zusammenwirkt, und wobei die Ultraschall-Prägeeinheit (24) derart eingerichtet ist, dass das Filtermedium (12) zwischen Ambosswalze (26) und Sonotrode (32) so hindurchbewegt werden kann, dass während des Transports des bahnförmigen Filtermediums (12) durch die Ultraschall-Prägeeinheit (24) die Spitze (34) der Sonotrode (32) in flächigen Abschnitten (37) zwischen benachbarten Knicklinien (36) zum Prägen von Abstandsnoppen an der Filtermediumbahn (12) entlang geführt wird.

2. Verfahren zur Herstellung eines zickzackförmig gefalteten Filterelements (13) insbesondere einer Brennkraftmaschine insbesondere eines Kraftfahrzeugs aus einem bahnförmigen mehrschichtigen Filtermedium (12), insbesondere mittels einer Vorrichtung (10) nach Anspruch 1, bei dem das bahnförmige Filtermedium (12) über eine Zuführeinrichtung (18, 22) einer energieeintragenden Ultraschall-Prägeeinheit (24), zugeführt wird, mit der das bahnförmige Filtermedium (12) geprägt wird und das Filtermedium (12) entlang von Knicklinien (36) mittels einer Falteinrichtung (42) gefaltet wird, **dadurch gekennzeichnet, dass** Schichten (14, 16) des mehrschichtigen Filtermediums (12) entlang wenigstens eines Funktionsbereichs (39) in wenigstens einem Abschnitt (37) des Filtermediums (12) zwischen benachbarten Knicklinien (36) mit der energieeintragenden Prägeeinheit (24) geprägt und beim Prägen stoffschlüssig verbunden werden, wobei das bahnförmige Filtermedium (12) durch die Ultraschall-Prägeeinheit (24) transportiert wird, wobei die energieeintragende Ultraschall-Prägeeinheit (24) eine Ambosswalze (26) mit Prägestegen (28) sowie eine Sonotrode (32) mit einem Prägestempel umfasst, welcher mit den Prägestegen (28) der Ambosswalze (26) zusammenwirkt, wobei das Filtermedium (12) zwischen Ambosswalze (26) und Sonotrode (32) so hindurchbewegt wird, dass während des Transports des bahnförmigen Filtermediums (12) durch die Ultraschall-Prägeeinheit (24) die Spitze (34) der Sonotrode (32) in flächigen Abschnitten (37) zwischen benachbarten Knicklinien (36) zum Prägen von Abstandsnoppen an der Filtermediumbahn (12) entlang geführt wird,

## Claims

1. Apparatus (10) for folding a multilayer web-shaped filter medium (12) of a filter element (13) in particular of an internal combustion engine in particular of a motor vehicle, with a feeding device (18, 22) for the web-shaped filter medium (12), with an energy-introducing ultrasonic embossing unit (24) for embossing the web-shaped filter medium (12) and with a folding device (42) for folding the web-shaped filter medium (12) along bending lines (36), **characterized in that** the energy-introducing ultrasonic embossing unit (24) is designed for embossing and for a bonded connection of layers (14, 16) of the multilayer filter medium (12) along at least one functional area (39) in at least one portion (37) of the filter medium (12) between adjacent bending lines (36), wherein the energy-introducing ultrasonic embossing unit (24) comprises an anvil roll (26) with embossing webs (28) as well as a sonotrode (32) with an embossing tool which interacts with the embossing webs (28) of the anvil roll (26), and wherein the ultrasonic embossing unit (24) is designed in such a way that the filter medium (12) can be moved between anvil roll (26) and sonotrode (32) in such a way that during the transport of the web-shaped filter medium (12) through the ultrasonic embossing unit (24) the tip (34) of the sonotrode (32) is guided in planar portions (37) between adjacent bending lines (36) for embossing spacer projections along the filter medium web (12).

2. Process for producing a zigzag-folded filter element (13) in particular of an internal combustion engine in particular of a motor vehicle from a web-shaped multilayer filter medium (12), in particular by means of an apparatus (10) according to claim 1, in which the web-shaped filter medium (12) is supplied via a feeding device (18, 22) to an energy-introducing ultrasonic embossing unit (24) by means of which the web-shaped filter medium (12) is embossed and the filter medium (12) is folded along bending lines (36) by means of a folding device (42), **characterized in that** layers (14, 16) of the multilayer filter medium (12) are embossed with the energy-introducing embossing unit (24) along at least one functional area (39) in at least one portion (37) of the filter medium (12) between adjacent bending lines (36) and firmly bonded during embossing, wherein the web-shaped filter medium (12) is conveyed through the ultrasonic embossing unit (24), wherein the energy-introducing ultrasonic embossing unit (24) comprises an anvil roll (26) with embossing webs (28) as well as a sonotrode (32) with an embossing tool which interacts with the embossing webs (28) of the anvil roll (26), wherein the filter medium (12) is moved between anvil roll (26) and sonotrode (32) in such a way that during the transport of the web-shaped filter medium (12) through the ultrasonic embossing unit (24) the tip (34) of the sonotrode (32) is guided in planar portions (37) between adjacent bending lines (36) for embossing spacer projections along the filter medium web (12).

## Revendications

1. Dispositif (10) servant à plier un milieu filtrant (12) multicouche sous forme de bande d'un élément filtrant (13) notamment d'un moteur à combustion interne notamment d'un véhicule automobile, avec un dispositif d'amenée (18, 22) du milieu filtrant (12) sous forme de bande, avec une unité d'estampage à ultrasons (24) apportant de l'énergie et destinée à estamper le milieu filtrant (12) sous forme de bande et avec un dispositif de pliage (42) destiné à plier le milieu filtrant (12) sous forme de bande le long de lignes de pliage (36), **caractérisé en ce que** l'unité d'estampage à ultrasons (24) apportant de l'énergie est exécutée de sorte à estamper et à relier, par liaison de matière, des couches (14, 16) du milieu filtrant (12) multicouche le long d'au moins une zone fonctionnelle (39) dans au moins une section (37) du milieu filtrant (12) entre des lignes de pliage (36) voisines, l'unité d'estampage à ultrasons (24) apportant de l'énergie comprenant un contre-cylindre (26) doté de nervures d'estampage (28) et une sonotrode (32) avec un poinçon d'estampage qui interagit avec les nervures d'estampage (28) du contre-cylindre (26), et l'unité d'estampage à ultrasons (24) étant conçue de manière à ce que le milieu filtrant (12) puisse être déplacé entre le contre-cylindre (26) et la sonotrode (32) de sorte que, pendant le transport du milieu filtrant (12) sous forme de bande à travers l'unité d'estampage à ultrasons (24), la pointe (34) de la sonotrode (32) soit guidée, dans des sections planes (37), entre des lignes de pliage (36) voisines afin d'estamper des nopes d'espacement le long de la bande de milieu filtrant (12).

2. Procédé de fabrication d'un élément filtrant (13) plié en zigzag notamment d'un moteur à combustion interne notamment d'un véhicule automobile, constitué d'un milieu filtrant (12) multicouche sous forme de bande, notamment au moyen d'un dispositif (10) selon la revendication 1, dans lequel le milieu filtrant (12) sous forme de bande est acheminé, par l'intermédiaire d'un dispositif d'amenée (18, 22) à une unité d'estampage à ultrasons (24) apportant de l'énergie avec laquelle le milieu filtrant (12) sous forme de bande est estampé et le milieu filtrant (12) est plié, le long de lignes de pliage (36), au moyen d'un dispositif de pliage (42), **caractérisé en ce que** des couches (14, 16) du milieu filtrant (12) multicouche sont estampées, avec l'unité d'estampage à ultrasons (24) apportant de l'énergie, le long d'au moins une zone fonctionnelle (39) dans au moins une section (37) du milieu filtrant (12) entre des lignes de pliage (36) voisines et sont reliées, lors de l'estampage, par liaison de matière, le milieu filtrant (12) sous forme de bande étant transporté à travers l'unité d'estampage à ultrasons (24), l'unité d'estampage à ultrasons (24) apportant de l'énergie comprenant un contre-cylindre (26) doté de nervures d'estampage (28) et une sonotrode (32) avec un poinçon d'estampage qui interagit avec les nervures d'estampage (28) du contre-cylindre (26), le milieu filtrant (12) étant déplacé entre le contre-cylindre (26) et la sonotrode (32) de sorte que, pendant le transport du milieu filtrant (12) sous forme de bande à travers l'unité d'estampage à ultrasons (24), la pointe (34) de la sonotrode (32) soit guidée, dans des sections planes (37), entre des lignes de pliage (36) voisines afin d'estamper des nopes d'espacement le long de la bande de milieu filtrant (12).

Fig.1

**Fig.2**

**Fig.3**

**Fig.4**

**Fig.5**

Fig.6

EP 2 758 146 B1

Fig. 7

EP 2 758 146 B1

Fig. 8

Fig. 9

Fig. 11

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010106087 A1
- DE 19735983 A1
- US 5089202 A
- EP 0429805 A2